Europäisches Patentamt

European Patent Office

Office européen des brevets

(11) Veröffentlichungsnummer: **0 439 031 A1**

## (12) EUROPÄISCHE PATENTANMELDUNG

(21) Anmeldenummer: 91100311.9

(22) Anmeldetag: 11.01.91

(51) Int. Cl.⁵: **B23K 35/00**, B23K 9/23, B21C 37/09

(30) Priorität: 23.01.90 DE 4001825

(43) Veröffentlichungstag der Anmeldung:
31.07.91 Patentblatt 91/31

(84) Benannte Vertragsstaaten:
AT BE CH DK ES FR GB LI NL SE

(71) Anmelder: MANNSTAEDT-WERKE GmbH & Co.
Louis-Mannstaedt-Strasse 94
W-5210 Troisdorf(DE)

(72) Erfinder: Schneegans, Jochen, Dipl.-Ing.
Maria Theresia Allee 7
W-5100 Aachen(DE)

(74) Vertreter: König, Reimar, Dr.-Ing. et al
Patentanwälte Dr.-Ing. Reimar König
Dipl.-Ing. Klaus Bergen Wilhelm-Tell-Strasse
14 Postfach 260162
W-4000 Düsseldorf 1(DE)

(54) Verfahren zum Schweissen von plattiertem Stahl.

(57) Verfahren zum Schweißen von mit korrosionsbeständigen metallischen Auflagen plattiertem Stahl unter Verwendung eines Zusatzwerkstoffs, bei dem die Schweißnaht alle Schichten der zu verschweißenden Komponenten aus plattiertem Stahl schneidet und vor Beginn des Schweißens zwischen die Fügeflächen eine kalte oder vorgewärmte Zwischenlage eingebracht wird, die derart legiert ist, daß das Material der erstarrten Schweißnaht korrosionsbeständig ist.

EP 0 439 031 A1

## "VERFAHREN ZUM SCHWEISSEN VON PLATTIERTEM STAHL"

Die Erfindung betrifft ein Verfahren zum Schweißen von mit korrosionsbeständigen metallischen Auflagen plattiertem Stahl mittels bekannter Schweißvorrichtungen, beispielsweise solchen zum Hochfrequenz-Induktionsschweißen, zum Hochfrequenz-Kontaktschweißen, zum Wolfram-Inertgas-Schweißen oder zum Laserstrahlschweißen.

Derartige Verfahren sind aus der Praxis beispielsweise für die Erzeugung längsnahtgeschweißter Rohre und Profile aus plattierten Kohlenstoffstählen gemäß DE-PS 23 33 359 und DE-PS 31 09 602, die unter dem Handelsnamen Platinox hergestellt, weiterverarbeitet und vertrieben werden, und - sofern "plattierte Stähle" als auch unter den Begriff "beschichtete Stähle" fallend angesehen werden - aus der DE-PS 34 46 280 bekannt. Demzufolge können zum Schweißen von mit korrosionsbeständigen metallischen Auflagen plattierten Stählen grundsätzlich alle zum Schweißen von hochlegierten oder metallbeschichteten Stählen bekannten Schweißverfahren zur Anwendung kommen, wobei jedoch jedes dieser Verfahren spezifische Nachteile aufweist.

Bei Widerstandspreßschweißverfahren, beispielsweise beim Hochfrequenz-Induktionsschweißen oder beim Hochfrequenz-Kontaktschweißen, wie sie zur Herstellung von längsnahtgeschweißten Rohren oder Profilen wirtschaftlich verwendet werden, stellt sich auf der Schweißnahtoberseite und der Schweißnahtwurzel durch den Preßdruck ein Grat ein, welcher in der Regel vor der Weiterverarbeitung der Rohre oder Profile spanend entfernt werden muß - zumindest auf der Außenseite dieser Halbfertigprodukte. Dabei wird jedoch in der Regel die Plattierung im Bereich der Schweißnaht zerstört und der in die Nahtüberhöhung gepreßte - normalerweise preiswerte und nicht korrosionsbeständige - Stahl der eigentlichen Trägerschicht des plattierten Stahls freigelegt - sofern bei dem vorstehend beschriebenen Verfahren nicht sowieso bereits von Anfang an ein mehr oder weniger breiter Spalt in der Nahtmitte ohne Plattierung geblieben ist. Um den Korrosionsschutz trotzdem für jedes Endprodukt aufrechterhalten zu können, muß dann in jedem Fall eine nachträgliche Verzinkung oder in Spezialfällen eine entsprechende Korrosionsschutzbeschichtung der Schweißnaht vorgenommen werden, was einerseits einen zusätzlichen und das Produkt verteuernden Bearbeitungsschritt bedeutet und andererseits nur in Ausnahmefällen dieselbe Qualität des Korrosionsschutzes erreicht wie die ursprüngliche Plattierung. Wird die Nachbearbeitung auf der Innenseite der Halbfertigprodukte - u.a. aus Kostengründen - gegenüber der vorgenannten Nachbehandlung allein auf ein Andrücken der Nahtüberhöhung beschränkt, besteht - neben der bereits oben genannten Möglichkeit einer von Anfang an fehlenden Plattierung in der Nahtmitte - in jedem Fall die Gefahr von Spaltkorrosionen.

Bei Lichtbogen-Schmelzschweißverfahren, beispielsweise beim Wolfram-Inertgas-Schweißen (WIG) oder beim Metall-Inertgas-Schweißen (MIG), entsteht zwangsläufig in der Schweißzone ein verhältnismäßig großes Schmelzbad, in dem eine starke Verwirbelung aller aufgeschmolzenen Materialien und damit deren nahezu homogene Durchmischung auftritt. In allen Fällen, in denen die Trägerschichten der zu verschweißenden Komponenten aus plattiertem Stahl einerseits aus preiswertem und nicht korrosionsbeständigem Stahl bestehen und andererseits einen wesentlichen Anteil an der Gesamtmenge der jeweiligen zu verschweißenden Komponente bilden, ist dann jedoch nicht zu erwarten, daß die entstandene Schweißnaht - unabhängig davon, ob sie spanend nachbearbeitet wird oder nicht oder ob sie weitere nachteilige Eigenschaften wie große Nahtbreite und grobe Gefügestruktur aufweist - wiederum korrosionsbeständig ist.

Dasselbe gilt letztlich auch für Strahlschweißverfahren, beispielsweise für das Laserstrahlschweißen, auch wenn das entstehende Schmelzbad in diesem Falle kleiner gehalten werden kann als bei den Lichtbogen-Schmelzschweißverfahren. Im Hinblick auf die Forderung nach einem vollständigen Korrosionsschutz für ein Endprodukt aus geschweißten Komponenten aus mit korrosionsbeständigen metallischen Auflagen plattiertem Stahl kann es jedoch dahingestellt bleiben, wie breit ein nicht korrosionsbeständiger Bereich der Schweißnaht ist - sofern er nicht gänzlich verhindert werden kann.

Der vorliegenden Erfindung liegt daher die Aufgabe zugrunde, ein Verfahren anzugeben, mit dessen Hilfe Schweißverbindungen zwischen Komponenten aus mit korrosionsbeständigen metallischen Auflagen plattiertem Stahl so hergestellt werden können, daß die erstarrte Schweißnaht mit oder ohne spanende Nachbearbeitung einem qualitativ gleichwertigen Korrosionsschutz wie die benachbarten plattierten Bereiche des aus den vorgenannten Komponenten erzeugten Endprodukts bietet.

Diese Aufgabe löst die Erfindung erfindungsgemäß dadurch, daß zwischen den Fügeflächen vor dem Beginn des Schweißens eine derart legierte Zwischenlage eingebracht wird, daß das Material der erstarrten Schweißnaht ebenfalls korrosionsbeständig ist.

Von den bekannten Verfahren, bei denen der Zusatzwerkstoff gleichzeitig mit der Schweißwärme eingebracht wird, unterscheidet sich das erfindungsgemäße Verfahren dadurch, daß der Zusatzwerkstoff vor Beginn des Schweißens kalt oder allenfalls vorgewärmt in die Schweißfuge eingelegt wird. Der so kaltdeponierte Zusatzwerkstoff besitzt eine der gewünschten Korrosionsbeständigkeit entsprechende Zusammensetzung und wird beim Schweißen ebenso wie der Grundwerkstoff und die Plattierung(en) aufgeschmolzen, ohne daß es erforderlich ist, während des Schweißens einen Zusatzwerkstoff in die Schweißzone einzubringen, wenngleich dies als zusätzliche Maßnahme möglich wäre, ohne den Rahmen der Erfindung zu verlassen.

Angesichts der dem Fachmann zur Verfügung stehenden Kenntnis der zu erwartenden Schweißnahtbreite und -form (bei Widerstandspreßschweißverfahren) bzw. der Größe des Schmelzbades(bei Lichtbogen-Schmelzschweiß- und Strahlschweißverfahren) braucht vor dem Einsetzen des Schweißprozesses jeweils nur eine ausreichende Menge eines legierten Materials bestimmter Zusammensetzung zwischen den Fügeflächen deponiert zu werden, um ein durch Preßdruck verursachtes Fließen von zur Abdeckung des - zumindest teilweise - mit Material der Trägerschicht angefüllten Schweißnahtinneren genügendem korrosionsbeständigem Material aus der Nahtmitte in die Nahtoberraupe und -wurzel (bei Widerstandspreßschweißverfahren) bzw. ein Einlegieren von genügend Korrosionsbeständigkeit verursachendem Material in das zur Schweißnaht erstarrende Schmelzbad - beispielsweise zur Erzeugung einer rostfreien Schweißnaht einen Anteil von mindestens 13 % Cr im gesamten Schmelzbadmaterial - sicherzustellen. Der Schweißprozeß selbst kann dann kontinuierlich entweder durch Verschieben des Schweißgutes oder der Schweißvorrichtung durchgeführt werden, ohne daß unmittelbar in der Schweißzone unter zusätzlichen Sicherheitsmaßnahmen von Hand oder mittels aufwendiger - da notwendigerweise räumlich beengter - Zusatzeinrichtungen irgendwelche weiteren Zusatzwerkstoffe in die Schweißnaht eingebracht werden müssen, wobei - jedenfalls im Falle der Lichtbogen-Schmelzschweiß-und Strahlschweißverfahren - bei hohen Schweißgeschwindigkeiten selbst bei ausreichend angepaßter Zufuhr der Zusatzwerkstoffe die Gefahr besteht, daß die Durchmischung der entstehenden Schmelzbäder nicht homogen erfolgt und anschließend eine inhomogene Schweißnaht entsteht, die den Qualitätsanforderungen nicht entspricht.

Besonders vorteilhaft ist das erfindungsgemäße Verfahren anzuwenden, wenn es zur Herstellung von Rohren oder Profilen angewendet wird, die aus kontinuierlich zum Schlitzrohr eingeformtem plattiertem Stahlblech durch Verschweißen der den Schlitz begrenzenden Fügeflächen erzeugt werden, da hier die Zwischenlage in einem ersten Ausführungsbeispiel in einfacher Weise als Draht oder Rand mittels einer Abroll-und Umlenkvorrichtung bekannter Art an geeigneter Stelle vor der - räumlich festliegenden - Schweißzone in den Schlitz zwischen den Fügeflächen eingeführt werden kann, wobei sie zuvor ggf. auch noch eine Vorwärmvorrichtung passieren kann. In einem anderen Ausführungsbeispiel ist es vorteilhafterweise auch möglich, die Zwischenlage vor bzw. in der Anfangsphase der Schlitzrohrformung auf eine oder beide vorgesehene(n) Fügefläche(n) aufzubringen und dort zu fixieren, indem beispielsweise mittels einer vorgenannten Abroll- und Umlenkvorrichtung eine bandförmige Zwischenlage mit die Fügeflächen überkragender Breite auf eine oder beide Fügefläche(n) aufgelegt wird und anschließend die eine Fügefläche überkragenden Ränder jeder Zwischenlage mittels einer geeigneten Anordnung von Druckwalzen bekannter Art auf die Ober- und Unterseite des zugehörigen plattierten Stahlblechs umgefalzt werden.

Das Verfahren kann vorteilhafterweise auch dadurch verifiziert werden, daß das Plattierungsmaterial selbst als Zwischenlage verwendet wird, indem die eigentliche Trägerschicht einer oder beider zu verschweißenden Komponenten plattierten Stahls aus in der Regel preiswertem und nicht korrosionsbeständigem Stahl vor dem Einsatz des Schweißprozesses so weit ausgekehlt wird, daß die entstehenden Überhänge aus Plattierungsmaterial in den von den durch die Auskehlung erzeugten neuen Fügeflächen der Trägerschichten aufgespannten Raum hineinreichen und eine ausreichende Materialmenge darstellen, um die anschließend zwischen den Fügeflächen erzeugte Schweißnaht in ähnlicher Weise wie die Plattierung selbst korrosionsbeständig zu machen. Dabei können die Überhänge - insbesondere in Abhängigkeit von der Tiefe der Auskehlung und der Schichtdicke der Plattierung - dem Schweißprozeß ohne weitere Bearbeitung oder auch nach ihrer Umfalzung auf die durch das Auskehlen neu erzeugten Fügeflächen der Trägerschichten zugeführt werden.

Auch die vorgenannte Variante des erfindungsgemäßen Verfahrens läßt sich besonders vorteilhaft bei der Herstellung von Rohren und Profilen verwenden, die aus kontinuierlich zum Schlitzrohr eingeformtem plattiertem Stahlblech durch Verschweißen der den Schlitz begrenzenden Fügeflächen erzeugt werden, indem vor dem Erreichen der Schweißzone in einfacher Weise vor oder in der Anfangsphase der Schlitzrohrformung eine Auskehlung der Trägerschicht(en) mittels einer Anordnung von spanenden Werkzeugen bekannter Art erfolgt und ggf. anschließend eine Druckrollenanordnung bekannter Art die Umfalzung der Überhänge des Plattierungsmaterials auf die neu entstandenen Fügeflächen der Trägerschichten durchführt.

Das Verfahren erlaubt vorteilhafterweise auch, mit unterschiedlichen korrosionsbeständigen metallischen Auflagen plattierte Stähle oder anderweitig vergütete Stähle mit Schichtstruktur zu schweißen, die nach beiden Seiten bezüglich ihrer Schichtnormalen gegen unterschiedliche Medien - beispielsweise einerseits gegenüber der Atmosphäre und andererseits gegenüber Schwefelsäure - korrosionsbeständig sein müssen - jedenfalls dann, wenn das Material der erforderlichen Zwischenlage mit der vorbestimmten Korrosionsbeständigkeit der Schweißnaht gegenüber einem Medium zwangsläufigauch die Korrosionsbeständigkeit der Schweißnaht gegenüber dem zweiten Medium sicherstellt.

**Patentansprüche**

1. Verfahren zum Schweißen von mit mindestens einer korrosionsbeständigen metallischen Auflage plattiertem Stahl, bei dem die Schweißnaht alle Schichten der zu verschweißenden Komponenten schneidet, dadurch gekennzeichnet, daß zwischen den Fügeflächen vor dem Beginn des Schweißens eine derart legierte Zwischenlage eingebracht wird, daß das Material der erstarrten Schweißnaht ebenfalls korrosionsbeständig ist.

2. Verfahren nach Anspruch 1, dadurch gekennzeichnet, daß beim kontinuierlichen Längsnahtschweißen von Rohren oder Profilen vor dem Erreichen der Schweißzone eine draht- oder bandförmige Zwischenlage kontinuierlich zwischen die Fügeflächen eingeführt wird.

3. Verfahren nach einem der Ansprüche 1 und 2, dadurch gekennzeichnet, daß die Zwischenlage kalt zwischen die Fügeflächen gebracht wird.

4. Verfahren nach einem der Ansprüche 1 und 2, dadurch gekennzeichnet, daß die Zwischenlage vorgewärmt wird.

5. Verfahren nach einem der Ansprüche 1 bis 4, dadurch gekennzeichnet, daß die Zwischenlage zunächst an mindestens einer Fügefläche fixiert wird.

6. Verfahren nach Anspruch 1, dadurch gekennzeichnet, daß als Zwischenlage ein Teil der Plattierungsauflage dient.

7. Verfahren nach Anspruch 6, dadurch gekennzeichnet, daß mindestens eine der Trägerschichten aus Stahl ausgekehlt wird und der entstehende Überhang aus der metallischen Auflage zwischen die Fügeflächen gebracht wird.

8. Verfahren nach Anspruch 7, dadurch gekennzeichnet, daß der Überhang ohne zusätzliche Bearbeitung dem Schweißprozeß unterworfen wird.

9. Verfahren nach Anspruch 6, dadurch gekennzeichnet, daß der Überhang nach der Auskehlung auf die Fügefläche umgefalzt wird.

10. Verfahren nach einem der Ansprüche 6 bis 9, dadurch gekennzeichnet, daß beim kontinuierlichen Längsnahtschweißen von Rohren oder Profilen das Auskehlen und/ oder das Umfalzen des Überhangs vor dem Erreichen der Schweißzone erfolgt.

**Europäisches Patentamt**

# EUROPÄISCHER RECHERCHENBERICHT

Nummer der Anmeldung

**EP 91 10 0311**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 432 336 (P. FISCHETTI) <br> * Das ganze Dokument * <br> — — — | 1-3 | B 23 K 35/00 <br> B 23 K 9/23 <br> B 21 C 37/09 |
| X | DE-C-5 823 87 (K. RUPPIN) <br> * Das ganze Dokument * <br> — — — | 1-3,5,6 | |
| X | PATENT ABSTRACTS OF JAPAN, Band 11, Nr. 377 (M-649)[2824], 9. Dezember 1987; <br> & JP-A-62 148 021 (KAWASAKI STEEL) 02-07-1987 <br> — — — | 1-3,5 | |
| X | PATENT ABSTRACTS OF JAPAN, Band 10, Nr. 207 (M-500), 19. Juli 1986; <br> & JP-A-61 49 789 (NIPPON KOKAN) 11-03-1986 <br> — — — | 1-3 | |
| A | US-A-3 327 383 (W.C. REED) <br> — — — | | |
| A,D | EP-A-0 185 145 (HOESCH) <br> — — — — — | | |

| RECHERCHIERTE SACHGEBIETE (Int. Cl.5) |
|---|
| B 23 K <br> B 21 <br> C |

Der vorliegende Recherchenbericht wurde für alle Patentansprüche erstellt

| Recherchenort | Abschlußdatum der Recherche | Prüfer |
|---|---|---|
| Den Haag | 02 Mai 91 | MOLLET G.H.J. |